# EUROPÄISCHE PATENTSCHRIFT

(11) **EP 2 108 101 B1**
(45) Veröffentlichungstag und Bekanntmachung des Hinweises auf die Patenterteilung: **20.11.2013**
(21) Anmeldenummer: 08707309.4
(22) Anmeldetag: 25.01.2008
(51) Int. Cl.: F27B 17/02, F27D 19/00, F27D 21/00, A61C 13/20

(54) **BRENNOFEN FÜR ZAHNERSATZ ODER ZAHNTEILERSATZ**
FURNACE FOR DENTAL PROSTHESIS OR PARTIAL DENTAL PROSTHESIS
FOUR POUR PROTHÈSES DENTAIRES OU PROTHÈSES DENTAIRES PARTIELLES

(30) Priorität: 21.02.2007 DE 102007008476
(43) Veröffentlichungstag der Anmeldung: 14.10.2009
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz, Finsterwald & Partner GbR
(86) Internationale Anmeldenummer: PCT/EP2008/000601
(87) Internationale Veröffentlichungsnummer: WO 2008/101583

(56) Entgegenhaltungen:
- DE-A1- 3 447 672
- DE-A1- 19 753 837
- GB-A- 1 077 021
- GB-A- 1 153 277
- JP-A- 2 073 413
- US-A1- 2005 011 885
- US-A1- 2006 169 687
- US-B1- 6 469 283

## Beschreibung

Die vorliegende Erfindung betrifft einen Brennofen für Zahnersatz oder Zahnteilersatz mit einer Brennkammer, mehreren Heizelementen zur Aufheizung der Brennkammer und einem Netzanschluss zum Anschließen der Heizelemente an ein Stromnetz,

Ein Brennofen gemäß dem Oberbegriff der Ansprüche 1 und 8 ist beispielsweise aus der DE 197 53 837 bekannt. Wichtig ist bei derartigen Öfen die Erzeugung einer hohen Temperatur und deren Einhaltung über die Brenndauer. Für die Qualität des Zahnersatzes oder Zahnteilersatzes ist eine genaue Regelung der Temperatur erforderlich.

Der Erfindung liegt die Aufgabe zugrunde, einen Brennofen der genannten Art anzugeben, der gegen eine Überlastung geschützt ist und der gleichzeitig eine erhöhte Funktionalität aufweist und gute Brennergebnisse liefert.

Diese Aufgabe wird durch einen Brennofen mit den Merkmalen des Anspruchs 1 oder des Anspruchs 8 gelöst.

Durch die Begrenzung der Leistungsaufnahme des Brennofens kann dieser mit unterschiedlichen Netzspannungen betrieben werden. Ein und derselbe Brennofen kann daher für Länder mit unterschiedlichen Netzspannungen gefertigt werden, wodurch sich die Herstellungskosten verringern. Zudem ist die Handhabung vereinfacht, da nicht auf die Netzspannung geachtet werden muss.

Es sind Mittel zur Überwachung und zur Begrenzung der Stromaufnahme des Brennofens vorgesehen. Dadurch kann verhindert werden, dass dem Netz ein zu hoher Strom entnommen wird.

Nach einer weiteren Ausgestaltung der Erfindung sind Mittel vorgesehen zur Überwachung und Begrenzung der an den Heizelementen wirksamen Spannung. Hierdurch kann eine Beschädigung der Heizelemente durch eine zu hohe Spannung verhindert werden.

Ferner sind Mittel vorgesehen, durch welche die am Brennofen anliegende Spannung ermittelbar ist, insbesondere automatisch. Diese Mittel dienen dazu, in Abhängigkeit der ermittelten Spannung zwischen Reihen- und Parallelschaltung der Heizelemente umzuschalten, insbesondere automatisch. Auf diese Weise kann eine Anpassung an die Netzspannung erfolgen.

Beispielsweise können die Heizelemente bei einer am Brennofen anliegenden Netzspannung von 115 Volt parallel geschaltet sein. Dadurch fallen an jedem Heizelement 115 Volt ab. Beträgt die Netzspannung dagegen 230 Volt, so ist eine Reihenschaltung bevorzugt. Bei beispielsweise drei Heizelementen fallen an jedem ca. 77 Volt ab. Allgemein wird die Schaltung bevorzugt so vorgenommen, dass an jedem Heizelement in der Größe von ca. 70 bis 120 Volt abfallen. Dies hat sich für den Betrieb der Heizelemente, insbesondere Heizelemente aus Siliziumcarbid, als vorteilhaft herausgestellt.

Die Umschaltung zwischen Parallel- und Reihenschaltung kann bevorzugt durch Strombrücken erfolgen. Durch Stecken oder Entfernen der Strombrücken können die Heizelemente in der gewünschten Weise zusammengeschaltet werden. Soll die Umschaltung dagegen automatisch erfolgen, so wird hierfür bevorzugt mindestens ein Relais verwendet.

Der von dem Brennofen aufgenommene Strom wird bevorzugt durch einen Hallsensor gemessen. Dies hat den Vorteil, dass die Strommessung potenzialfrei erfolgen kann.

Nach einer weiteren Ausgestaltung der Erfindung sind Mittel vorgesehen, durch welche die Stromaufnahme und/oder die an die Heizelemente angelegte Spannung in Abhängigkeit von der Festigkeit der Heizelemente bei der gegenwärtig herrschenden oder einer Maximaltemperatur der Heizelemente begrenzbar ist. Durch diese Mittel kann gewährleistet werden, dass die Heizelemente im Betrieb nicht zerstört oder beschädigt werden. Dies ist insbesondere bei Heizelementen aus Siliziumcarbid wichtig, da deren Festigkeit mit steigender Temperatur relativ stark abnimmt. Zudem haben diese Heizelemente einen temperaturabhängigen Widerstand, wobei die Abhängigkeit stark nichtlinear ist. Dadurch besteht ein erhöhtes Risiko, dass die Stromaufnahme der Heizelemente zu groß wird.

Die Festigkeitswerte der Heizelemente können nach einer Ausgestaltung der Erfindung aus einer zuvor erstellten Tabelle entnommen werden, in welcher die Festigkeit von Heizelementen aus dem verwendeten Material in Abhängigkeit von der Temperatur angegeben ist.

Nach einer weiteren Ausgestaltung der Erfindung sind Mittel vorgesehen, durch welche die Leistungsaufnahme des Brennofens in Abhängigkeit von einer zulässigen Leistungsaufnahme, insbesondere zulässigen Stromentnahme aus einem Versorgungsnetz, begrenzt wird. Mit diesen Mitteln kann gewährleistet werden, dass das Versorgungsnetz durch den Brennofen nicht überlastet wird.

Zur Leistungsbegrenzung ist alternativ eine Phasenanschnittsteuerung einer an den Brennofen angelegten Wechselspannung vorgesehen. Durch die Phasenanschnittsteuerung werden entsprechend der gewünschten Leistungsaufnahme des Brennofens nur bestimmte Bruchteile der Wechselspannung an die Heizelemente gelegt, während die restlichen Anteile in das Versorgungsnetz zurückgespeist werden. Das heißt, es werden Bruchteile der vom Versorgungsnetz gelieferten Sinuswellen an die Heizelemente gelegt und die verbleibenden Teile in das Netz zurückgegeben. Um dabei einer Verseuchung des Netzes vorzubeugen, kann ein Netzfilter vorgesehen sein. Aus dem Bruchteil der an die Heizelemente angelegten Wechselspannung ergibt sich die resultierende Spannung und damit Leistungsaufnahme der Brennelemente. In derselben Weise kann auch eine Phasenabschnittsteuerung verwendet werden.

Eine andere Möglichkeit besteht darin, eine sogenannte Halbwellensteuerung zur Leistungsbegrenzung zu verwenden. Dabei werden die Halbwellen der Wechselspannung zum einen auf die einzelnen Heizelemente aufgeteilt und zum anderen können auch einzelne Halbwellen an kein Heizelement angelegt werden, sodass sich insgesamt ebenfalls eine Leistungsreduzierung ergibt. Dasselbe gilt für die Phasenan- oder -abschnittsteuerung. Auch hier können die Bruchteile der Sinuswelle auf die einzelnen Heizelemente verteilt werden.

Ausführungsbeispiele der Erfindung sind in der Zeichnung dargestellt und werden nachfolgend beschrieben. Es zeigen, jeweils in schematischer Darstellung,
- Fig. 1: einen erfindungsgemäßen Brennofen,
- Fig. 2: einen Schaltplan für eine wahlweise Parallel- oder Reihenschaltung von Heizelementen,
- Fig. 3: eine Darstellung der Temperaturabhängigkeit des Nennwiderstandes eines Heizkörpers,
- Fig. 4: eine Darstellung der maximalen Leistungen in einem erfindungsgemäßen Brennofen,
- Fig. 5: eine Darstellung der Regelung über Halbwellensteuerung oder Phasenanschnittsteuerung, und
- Fig. 6: eine Darstellung der maximalen Spannung in Abhängigkeit von der Heizelementtemperatur.

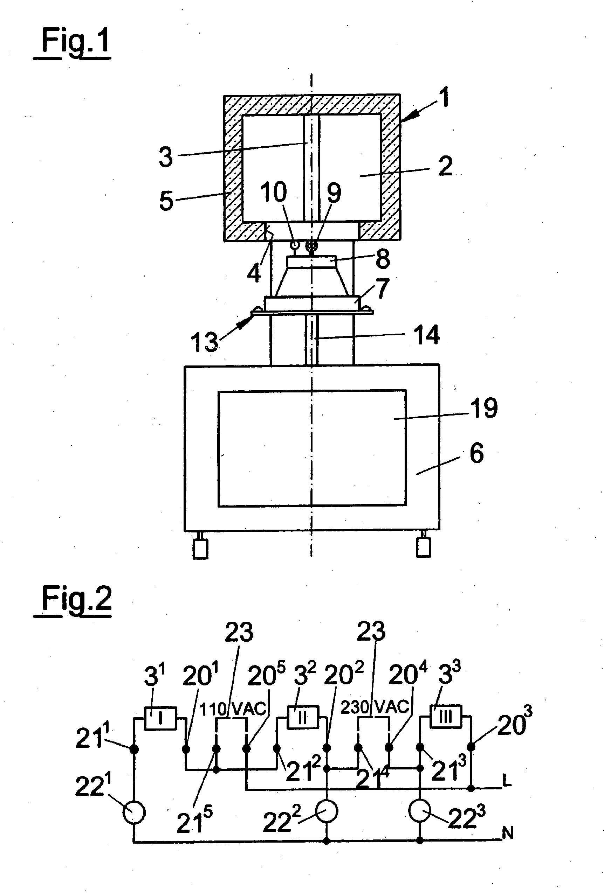

Der in Fig. 1 dargestellte Brennofen umfasst ein Gehäuse 1 mit einer Brennkammer 2, die über Heizelemente 3 beheizbar und bevorzugt über nicht dargestellte Mittel evakuierbar ist. Die Heizelemente 3 sind als Heizstäbe ausgebildet und über den Umfang der Brennkammer 2 verteilt angeordnet. Besonders bevorzugt sind drei derartige Heizelemente 3 vorgesehen.

Die Brennkammer 2 weist auf ihrer Unterseite eine Öffnung 4 auf und ist allseits bis auf die Öffnung 4 von einer Isolationsschicht 5, insbesondere aus Schamott oder Keramikfasern umgeben. Unterhalb der Brennkammer 2 ist ein Gehäuseteil 6 mit einem hier nicht dargestellten Antriebsmechanismus für einen Liftteller 13 vorhanden, der einen Brenntisch 7 trägt und über eine Stange 14 von der Antriebsvorrichtung zum Schließen und Öffnen der Brennkammer 2 bewegbar ist. Auf dem Brenntisch 7 ist ein Brenngutträger 8 mit darauf angeordnetem Brennobjekt 9 dargestellt. Neben dem Brennobjekt 9 ist auf dem Brenngutträger 8 ein Thermosensor 10 vorhanden.

Der Gehäuseteil 6 umfasst Steuermittel und Programmiereinrichtungen für den Brennofen sowie Anzeigemittel 19. Diese Steuermittel umfassen Mittel zur Begrenzung der Leistungsaufnahme des Brennofens, insbesondere Mittel zur Überwachung und zur Begrenzung der Stromaufnahme und/oder der an den Heizelementen 3 wirksamen Spannung. Durch diese Mittel wird außerdem die am Brennofen anliegende Spannung automatisch ermittelt. In Abhängigkeit davon werden die Brennelemente 3 des Brennofens parallel oder in Reihe geschaltet, um bevorzugt eine Spannung im Bereich von 70 bis 120 Volt an den Heizelementen 3 zu erreichen. Bei einer Netzspannung von beispielsweise 230 Volt werden die Heizelemente 3 also bevorzugt in Reihe geschaltet, sodass an jedem Heizelement eine Spannung von ca. 77 Volt abfällt. Beträgt die Netzspannung dagegen beispielsweise 115 Volt, so werden die Heizelemente 3 parallel geschaltet, sodass an jedem Heizelement 115 Volt abfallen.

Für die Umschaltung zwischen Parallel- und Reihenschaltung können nach einer Ausgestaltung der Erfindung Strombrücken vorgesehen sein. Eine entsprechende Schaltung ist in Fig. 2 dargestellt. Die drei Heizelemente 3¹, 3² und 3³ weisen jeweils zwei Eingangsklemmen 20¹, 20² und 20³ sowie drei Ausgangsklemmen 21¹, 21² und 21³ auf. Zwischen den Heizelementen 3¹, 3² und 3³ sind außerdem zwei weitere Klemmenpaare vorhanden, nämlich zwei weitere Eingangsklemmen 20⁴ und 20⁵ sowie zwei weitere Ausgarigsklemmen 21⁴ und 21⁵. Schließlich sind den Heizelementen 3¹, 3² und 3³ drei Relais 22¹, 22² und 22³ zugeordnet.

Wie dargestellt, ist an die Lastzuleitung L des Stromnetzes die Eingangsklemme 20³ des dritten Heizelementes 3³ und die Eingangsklemme 20⁵ des zweiten weiteren Klemmenpaares angeschlossen, während die Nullleitung N des Stromnetzes an die jeweils eine Seite der drei Relais 22¹, 22² und 22³ angeschlossen ist. Die andere Seite des ersten und dritten Relais 22¹ und 22³ ist jeweils an die Ausgangsklemme 21¹, 21³ des ersten bzw. dritten Heizelementes 3¹, 3³ angeschlossen, während die andere Seite des zweiten Relais 22² an die Eingangsklemme 20² des zweiten Heizelementes 3² angeschlossen ist. Schließlich ist das erste weitere Klemmenpaar mit seiner Eingangsklemme 20⁴ an den Ausgang 21³ des dritten Heizelementes 3³ und die Ausgangsklemme 21⁴ an den Eingang 20² des zweiten Heizelementes 3² angeschlossen und die Ausgangsklemme 21⁵ des zweiten weiteren Klemmenpaares an die Eingangsklemme 20¹ des ersten Heizelementes 3¹ und die Ausgangsklemme 21² des zweiten Heizelementes 3².

Wie man erkennt, kann durch wahlweises Einsetzen einer Strombrücke 23, hier strichliert dargestellt, in das erste weitere Klemmenpaar 204, 21⁴ oder in das zweite weitere Klemmenpaar 20⁵, 21⁵ eine Reihen- bzw. Parallelschaltung der Heizelemente 3¹, 3² und 3³ realisiert werden. Wie man weiterhin erkennt, sind die drei Heizelemente 3¹, 3² und 3³ bei Reihenschaltung über nur ein Leistungsrelais 22¹, bei Parallelschaltung dagegen über alle drei Leistungsrelais 22¹, 22² und 22³ betrieben. Bei Reihenschaltung werden alle drei Heizelemente 3¹, 3² und 3³ daher gemeinsam angesteuert, während bei Parallelschaltung eine individuelle Ansteuerung möglich ist.

Eine andere Möglichkeit besteht darin, die Brücke 23 durch zwei zusätzliche Relais zu ersetzen. Damit kann eine automatische Umschaltung zwischen Reihen- und Parallelschaltung realisiert werden. In beiden Fällen wird die Reihenschaltung bevorzugt bei einer Netzspannung von 230 Volt und die Parallelschaltung bei einer Netzspannung von 115 Volt eingesetzt. Alternativ kann auch ein Relais mit zwei Wechslern verwendet werden. Da die Relais nicht unter Last umgeschaltet werden, spielen die maximalen Schaltzyklen keine Rolle.

Wie gesagt, kann mit der Steuerung des erfindungsgemäßen Brennofens die Leistungs-, insbesondere Stromaufnahme begrenzt werden. Eine Leistungsbegrenzung ist deshalb erforderlich, weil die Heizelemente, insbesondere Heizelemente aus Siliziumcarbid, einen nichtlinearen temperaturabhängigen Widerstand aufweisen. Des Weiteren besitzen die Heizelemente auch temperaturabhängige mechanische Belastungsgrenzen. Schließlich darf die netzabhängig abgegebene Maximalleistung nicht überschritten werden. Die maximale Heizrate ist somit auch netzabhängig. Zur Ermittlung der Stromaufnahme durch die Heizelemente dient bevorzugt ein Hallsensor.

Zur Begrenzung der Leistungs- bzw. Stromaufnahme kann eine Halbwellensteuerung, alternativ eine Phasenanschnitt oder -abschnittsteuerung dienen.

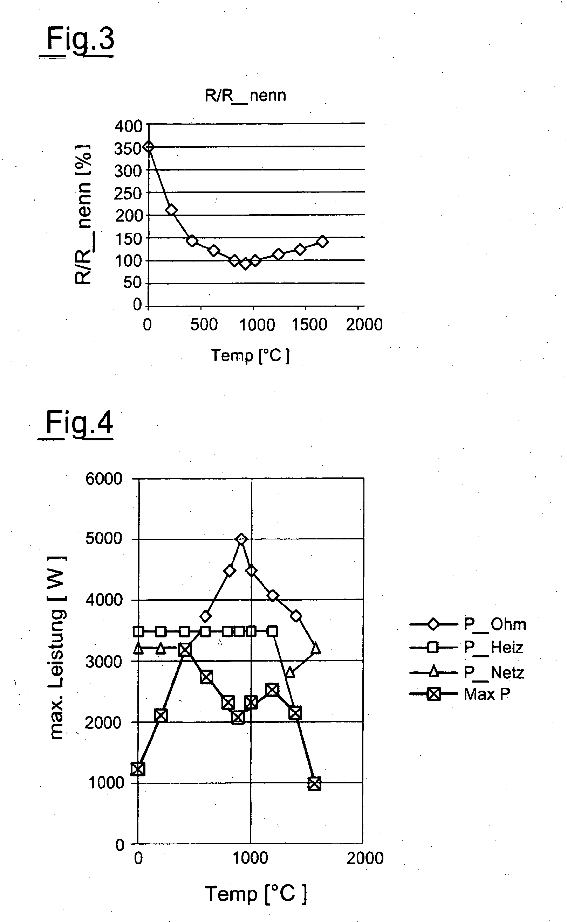

Fig. 3 zeigt den temperaturabhängigen Nennwiderstand eines beispielhaften Heizkörpers, wie er für den erfindungsgemäßen Brennofen eingesetzt werden kann. Und zwar ist das Verhältnis des Widerstandes zu dem Nennwiderstand in Prozent über der Temperatur in Grad Celsius aufgetragen. Man erkennt, dass der Widerstand ein Minimum bei ca. 900°C aufweist.

Fig. 4 zeigt die maximale ohmsche Leistung sowie die maximalen Leistungen der Heizkörper und des Netzes sowie die sich daraus ergebende erlaubte Gesamtmaximalleistung. Als Beispiel wurde eine Netzspannung von 230 Volt gewählt. Die maximale Leistung ist in Watt über der Temperatur in Grad Celsius aufgetragen. Man erkennt, dass die ohmsche Leistung wieder bei 900°C ein Maximum hat. Die Leistung der Heizkörper bleibt bis zu einer Temperatur von ca. 1200°C konstant und fällt dann stark ab. Die aus dem Netz entnommene Leistung bleibt zunächst bis zu einer Temperatur von ca. 500°C konstant, hat dann bei ca. 900°C sein Minimum und steigt danach wieder auf das vorhergehende Niveau an. Entsprechend verhält sich die erlaubte Gesamtmaximalleistung, indem sie zunächst bis auf ca. 500°C ansteigt, danach auf ein Minimum bei 900°C abfällt, erneut ansteigt bis bei ca. 1200°C und dann wieder stark abfällt. Auf diese Weise kann gewährleistet werden, dass die aus dem Netz entnommene Leistung einen Maximalwert nicht übersteigt und dass die mechanische Belastung der Heizkörper im zulässigen Bereich bleibt.

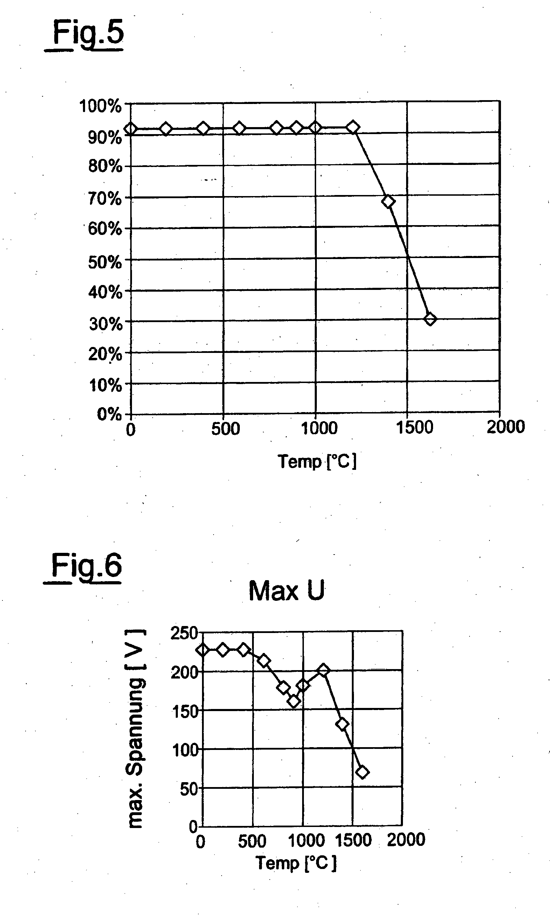

In Fig. 5 ist die Regelung über Halbwellensteuerung beispielhaft dargestellt. Angegeben ist der prozentuale Anteil der an die Heizelemente 3 angelegten Halbwellen. Wie man erkennt, ist der Anteil bis zu einer Temperatur von ca. 1200°C gleichbleibend etwas über 90 %. Danach wird der Anteil bis zur Endtemperatur von ca. 1600°C auf 30 % abgesenkt. Damit wird erreicht, dass die Leistungsaufnahme in der gewünschten Weise begrenzt wird.

Fig. 6 zeigt schließlich den Spannungsverlauf an den Heizelementen 3 bei einer Netzspannung von 230 Volt über die Temperatur. Man erkennt, dass die angelegte Spannung zunächst der Netzspannung entspricht und dann auf ein relatives Minimum bei ca. 900°C absinkt. Bis ca. 1200°C steigt die Spannung dann wieder auf ca. 200 Volt an, um danach bis zur Endtemperatur von ca. 1600°C auf ca. 70 Volt abzufallen. Dieser Spannungsverlauf ergibt sich aus der in Fig. 5 dargestellten Halbwellensteuerung in Verbindung mit dem sich temperaturabhängig ändernden Widerstand der Heizelemente 3.

Alternativ zu einer Halbwellensteuerung kann auch eine Phasenanschnittsteuerung verwendet werden, um die Leistungsaufnahme in der gewünschten Weise zu begrenzen. Dabei kann für die Regelung die Festigkeit der Heizelemente 3 in Abhängigkeit von der Temperatur berücksichtigt werden. Die Festigkeit kann aus einer zuvor erstellten Tabelle entnommen werden. Die Begrenzung der Leistungsaufnahme durch Halbwellen- oder Phasenanschnittsteuerung kann außerdem so erfolgen, dass die einzelnen Heizelemente nacheinander mit einer Halbwelle oder einem Teil einer Halbwelle beaufschlagt werden. Das heißt, die drei Heizelemente 3¹, 3² und 3³ werden nacheinander beaufschlagt. Auch ist es möglich, jedes der drei Heizelemente 3¹, 3² und 3³ für sich intermittierend mit einer Halbwelle oder einem Teil einer Halbwelle zu beaufschlagen. Verbleibende Halbwellen oder Teile von Halbwellen können außerdem vollständig ausgeblendet werden, indem sie in das Netz zurückgespeist werden.

Mit dem erfindungsgemäßen Brennofen und der beschriebenen Steuerung zur Begrenzung der Leistungsaufnahme kann der Brennofen in vielfältiger Weise eingesetzt werden und erzielt hervorragende Brennergebnisse. Insbesondere kann der Brennofen mit verschiedenen Netzspannungen betrieben werden, wobei die Umschaltung auch automatisch erfolgen kann. Zudem hat der beschriebene Brennofen den großen Vorteil, dass für die Heizelemente Siliziumcarbid verwendet werden kann, da durch die Leistungsbegrenzung sichergestellt werden kann, dass diese nicht wegen zu hoher Leistungsaufnahme beschädigt oder zerstört werden.

### Bezugszeichenliste

- 1: Brennofengehäuse
- 2: Brennkammer
- 3: Heizelement
- 4: Zufuhröffnung
- 5: Isolierung
- 6: Gehäuseteil
- 7: Brenntisch
- 8: Brenngutträger
- 9: Brennobjekt
- 10: Thermosensor
- 13: Liftteller
- 14: Stange
- 19: Anzeigevorrichtung
- 20: Eingangsklemme
- 21: Ausgangsklemme
- 22: Relais
- 23: Strombrücke

## Patentansprüche

1. Brennofen für Zahnersatz oder Zahnteilersatz mit einer Brennkammer (2), mehreren Heizelementen (3) zur Aufheizung der Brennkammer (2) und einem Netzanschluss zum Anschließen der Heizelemente (3) an ein Stromnetz, wobei Mittel zur Begrenzung der Stromaufnahme zur Begrenzung der Leistungsaufnahme des Brennofens vorgesehen sind,
**dadurch gekennzeichnet, dass**
durch die Mittel die am Brennofen anliegende Spannung zur Überwachung der Stromaufnahme ermittelbar ist, insbesondere automatisch, und dass
in Abhängigkeit der ermittelten Spannung zwischen einer Reihen- und einer Parallelschaltung der Heizelemente (3) umschaltbar ist, insbesondere automatisch.

2. Brennofen nach Anspruch 1,
**dadurch gekennzeichnet, dass**
Mittel zur Überwachung und Begrenzung der an den Heizelementen (3) wirksamen Spannung vorgesehen sind, insbesondere zur Begrenzung auf ca. 70 bis 120 Volt am einzelnen Heizelement (3).

3. Brennofen nach Anspruch 1 oder 2,
**dadurch gekennzeichnet, dass**
die Heizelemente (3) bei einer am Brennofen anliegenden Spannung von 115 Volt ± 50 Volt parallel geschaltet sind und/oder dass bei einer am Brennofen anliegenden Spannung von 230 Volt ± 50 Volt zwei bis vier Heizelemente zueinander in Reihe geschaltet sind.

4. Brennofen nach Anspruch 1, 2 oder 3,
**dadurch gekennzeichnet, dass**
die Umschaltung über eine Strombrücke (23) oder über mindestens ein Relais erfolgt.

5. Brennofen nach einem der vorhergehenden Ansprüche,
**dadurch gekennzeichnet, dass** zur Strommessung ein Hallsensor vorgesehen ist.

6. Brennofen nach einem der vorhergehenden Ansprüche,
**dadurch gekennzeichnet, dass**
Mittel vorgesehen sind, durch welche die Stromaufnahme und/oder die an die Heizelemente (3) angelegte Spannung in Abhängigkeit von der Festigkeit der Heizelemente (3) bei der gegenwärtig herrschenden oder einer Maximaltemperatur der Heizelemente (3) begrenzbar ist, wobei insbesondere die Festigkeit bei der jeweiligen Temperatur durch die Mittel aus einer zuvor erstellten Tabelle entnehmbar ist.

7. Brennofen nach einem der vorhergehenden Ansprüche,
**dadurch gekennzeichnet, dass**
Mittel vorgesehen sind, durch welche die Leistungsaufnahme in Abhängigkeit von einer zulässigen Leistungsentnahme, insbesondere Stromentnahme aus dem Versorgungsnetz, begrenzbar ist.

8. Brennofen für Zahnersatz oder Zahnteilersatz mit einer Brennkammer (2), mehreren Heizelementen (3) zur Aufheizung der Brennkammer (2) und einem Netzanschluss zum Anschließen der Heizelemente (3) an ein Stromnetz, wobei Mittel zur Begrenzung der Leistungsaufnahme des Brennofens vorgesehen sind,
**dadurch gekennzeichnet, dass**
zur Leistungsbegrenzung eine Phasenan- oder -abschnittsteuerung einer an den Brennofen angelegten Wechselspannung vorgesehen ist und/oder dass zur Leistungsbegrenzung eine Halbwellensteuerung einer an den Brennofen angelegten Wechselspannung vorgesehen ist, wobei Mittel vorgesehen sind, durch welche die einzelnen Heizelemente (3) jeweils für sich intermittierend bestrombar sind.

9. Brennofen nach Anspruch 8,
**dadurch gekennzeichnet, dass**
die einzelnen Heizelemente (3) nacheinander mit einer Halbwelle oder einem Teil einer Halbwelle des anliegenden Wechselstroms beaufschlagbar sind.

10. Brennofen nach einem der vorhergehenden Ansprüche,
**dadurch gekennzeichnet, dass**
die Mittel so ausgelegt sind, dass einzelne Halbwellen oder Teile von Halbwellen vollständig ausblendbar sind.

11. Brennofen nach einem der vorhergehenden Ansprüche,
**dadurch gekennzeichnet, dass**
die Heizelemente aus Siliziumcarbid bestehen.

12. Brennofen nach einem der vorhergehenden Ansprüche,
**dadurch gekennzeichnet, dass**
die Heizelemente (3) als Stäbe ausgebildet und in vertikaler Ausrichtung über den Umfang der Brennkammer verteilt angeordnet sind.

## Claims

1. A furnace for a dental prosthesis or a partial dental prosthesis having a firing chamber (2), a plurality of heating elements (3) for the heating of the firing chamber (2) and a power supply connection for the connection of the heating elements (3) to a mains supply, wherein means are provided for the restriction of the power consumption of the furnace,
**characterized in that**
the voltage applied to the furnace can be determined, in particular automatically, for monitoring the power consumption by the means; and
**in that** switching between a series connection and a parallel connection of the heating elements (3) can take place, in particular automatically, in dependence on the determined voltage.

2. A furnace in accordance with claim 1,
**characterized in that**
means are provided for the monitoring and restriction of the voltage effective at the heating elements (3), in particular for the restriction to approximately 70 to 120 volts at the individual heating element (3).

3. A furnace in accordance with claim 1 or claim 2,
**characterized in that**
the heating elements (3) are connected in parallel with a voltage applied to the furnace of 115 volts ±50 volts; and/or
**in that** two to four heating elements are connected to one another in series with a voltage applied to the furnace of 230 volts ± 50 volts.

4. A furnace in accordance with claim 1, claim 2 or claim 3,
**characterized in that**
the switching takes place via a current bridge (23) or via at least one relay.

5. A furnace in accordance with any one of the preceding claims,
**characterized in that**
a Hall sensor is used for the current measurement.

6. A furnace in accordance with any one of the preceding claims,
**characterized in that**
means are provided by which the current consumption and/or the voltage applied to the heating elements (3) can be restricted in dependence on the strength of the heating elements (3) at the currently prevailing temperature or at a maximum temperature of the heating elements (3), wherein the strength at the respective temperature can in particular be taken by the means from a previously prepared table.

7. A furnace in accordance with any one of the preceding claims,
**characterized in that**
means are provided by which the power consumption can be restricted in dependence on a permitted power removal, in particular the current removal from the mains supply.

8. A furnace for a dental prosthesis or a partial dental prosthesis having a firing chamber (2), a plurality of heating elements (3) for the heating of the firing chamber (2) and a power supply connection for the connection of the heating elements (3) to a mains supply, wherein means are provided for the restriction of the power consumption of the furnace,
**characterized in that**
a leading edge phase control or a trailing edge phase control of an AC voltage applied to the furnace is provided for the power restriction; and/or
**in that** a half-wave control of an AC voltage applied to the furnace is provided for the power restriction, wherein means are provided by which the individual heating elements (3) can have current applied intermittently per se in each case.

9. A furnace in accordance with claim 8,
**characterized in that**
the individual heating elements (3) can be acted on sequentially by a half-wave or by a part of a half-wave of the applied AC current.

10. A furnace in accordance with any one of the preceding claims,
**characterized in that**
the means are configured such that individual half-waves or parts of half-waves can be fully masked.

11. A furnace in accordance with any one of the preceding claims,
**characterized in that**
the heating elements comprise silicon carbide.

12. A furnace in accordance with any one of the preceding claims,
**characterized in that**
the heating elements (3) are made as rods and are arranged distributed over the periphery of the firing chamber in a vertical alignment.

## Revendications

1. Four de cuisson pour prothèse dentaire ou partie de prothèse dentaire comprenant une chambre de cuisson (2), plusieurs éléments chauffants (3) pour chauffer la chambre de cuisson (2) et un branchement au réseau pour le raccordement des éléments chauffants (3) à un réseau électrique, dans lequel il est prévu des moyens pour limiter le courant absorbé afin de limiter la consommation de puissance du four de cuisson,
**caractérisé en ce qu'**à l'aide desdits moyens, il est possible de déterminer la tension appliquée au four de cuisson pour surveiller le courant absorbé, en particulier automatiquement, et **en ce que**
en fonction de la tension déterminée, il est possible d'effectuer une inversion entre un branchement en série et un branchement en parallèle des éléments chauffants (3), en particulier automatiquement.

2. Four de cuisson selon la revendication 1,
**caractérisé en ce qu'**il est prévu des moyens pour surveiller et limiter la tension efficace au niveau des éléments chauffants (3), en particulier pour une limitation à environ 70 à 120 volts au niveau des éléments chauffants individuels (3).

3. Four de cuisson selon la revendication 1 ou 2,
**caractérisé en ce que** les éléments chauffants (3) sont branchés en parallèle lorsque la tension appliquée au four de cuisson est de 115 V ± 50 V, et/ou **en ce que** lorsque la tension appliquée au four de cuisson est de 230 V ± 50 V, les éléments chauffants sont branchés en série les uns avec les autres en nombre de deux à quatre.

4. Four de cuisson selon la revendication 1, 2 ou 3,
**caractérisé en ce que** l'inversion a lieu via un pont électrique (23) ou via au moins un relais.

5. Four de cuisson selon l'une des revendications précédentes,
**caractérisé en ce qu'**il est prévu un capteur de Hall pour la mesure du courant.

6. Four de cuisson selon l'une des revendications précédentes,
**caractérisé en ce qu'**il est prévu des moyens grâce auxquels le courant absorbé et/ou la tension appliquée aux éléments chauffants (3) peut être limité(e) en fonction de la solidité des éléments chauffants (3) à la température actuellement régnant ou à une température maximum des éléments chauffants (3), et la solidité à la température respective est en particulier susceptible d'être prélevée par lesdits moyens à partir d'une table établie au préalable.

7. Four de cuisson selon l'une des revendications précédentes,
**caractérisé en ce qu'**il est prévu des moyens grâce auxquels la consommation de puissance est susceptible d'être limitée en fonction d'un appel de puissance admissible, en particulier d'un appel de courant depuis le réseau d'alimentation.

8. Four de cuisson pour prothèse dentaire ou partie de prothèse dentaire comprenant une chambre de cuisson (2), plusieurs éléments chauffants (3) pour chauffer la chambre de cuisson (2) et un raccordement au réseau pour raccorder les éléments chauffants (3) à un réseau électrique, dans lequel il est prévu des moyens pour limiter la consommation de puissance du four de cuisson,
**caractérisé en ce que**
pour la limitation de puissance il est prévu une commande à découpage de phase d'une tension alternative appliquée au four de cuisson, et/ou en ce que pour la limitation de puissance il est prévu une commande de demi-onde d'une tension alternative appliquée au four de cuisson, et il est prévu des moyens grâce auxquels les éléments chauffants individuels (3) peuvent être respectivement alimentés en courant de façon intermittente.

9. Four de cuisson selon la revendication 8,
**caractérisé en ce que** les éléments chauffants individuels (3) sont susceptibles d'être alimentés les uns après les autres avec une demi-onde ou une partie d'une demi-onde du courant alternatif appliqué.

10. Four de cuisson selon l'une des revendications assez Dante,
**caractérisé en ce que** lesdits moyens sont ainsi conçus que des demi-ondes individuelles ou des parties de demi-ondes peuvent être entièrement occultées.

11. Four de cuisson selon l'une des revendications précédentes,
**caractérisé en ce que** les éléments chauffants sont en carbure de silicium.

12. Four de cuisson selon l'une des revendications précédentes,
**caractérisé en ce que** les éléments chauffants (3) sont réalisés comme des barreaux et sont agencés en orientation verticale répartis sur la périphérie de la chambre de cuisson.
